(19) Europäisches Patentamt
European Patent Office
Office européen des brevets

(11) **EP 4 335 598 A1**

(12) **EUROPEAN PATENT APPLICATION**

(43) Date of publication:
**13.03.2024 Bulletin 2024/11**

(21) Application number: **22194229.5**

(22) Date of filing: **06.09.2022**

(51) International Patent Classification (IPC):
***B25J 9/16*** (2006.01)   *G05B 19/427* (2006.01)

(52) Cooperative Patent Classification (CPC):
**B25J 9/1612; B25J 9/1643;** B25J 9/161;
G05B 19/427; G05B 2219/36442;
G05B 2219/39482; G05B 2219/40327;
G05B 2219/40499

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **DeepMind Technologies Limited**
**London EC4A 3TW (GB)**

(72) Inventors:
• **CHEN, Jose Enrique**
**London, N1C 4AG (GB)**
• **LAURENS, Antoine Marin Alix**
**London, N1C 4AG (GB)**

• **NORI, Francesco**
**London, N1C 4AG (GB)**
• **ROMANO, Francesco**
**London, N1C 4AG (GB)**
• **SCHOLZ, Jonathan Karl**
**London, N1C 4AG (GB)**
• **FERNANDES MARTINS, Murilo**
**London, N1C 4AG (GB)**

(74) Representative: **Watkin, Timothy Lawrence**
**Harvey**
**Marks & Clerk LLP**
**2nd Floor, Wytham Court**
**11 West Way**
**Oxford OX2 0JB (GB)**

(54) **ACTION ABSTRACTION CONTROLLER FOR FULLY ACTUATED ROBOTIC MANIPULATORS**

(57)    Methods, systems, and apparatus, including computer programs encoded on computer storage media, for controlling a robot manipulator that has a plurality of joints. One of the methods includes obtaining a control input that comprises one or more velocity values that specify a target velocity of a reference point in a given coordinate frame; determining a respective joint velocity for each of the plurality of joints by generating a solution to an optimization problem formulated from the control input; and controlling the robot manipulator, including causing the plurality of joints of the robot manipulator to move in accordance with the respective joint velocities to approximate the control input.

FIG. 1

EP 4 335 598 A1

**Description**

BACKGROUND

This specification relates to robotics, and more particularly to controlling the movement of a robot manipulator.
In robotics, robot manipulator kinematics deals with the movements of the robot end effector and how the robot joints need to move to achieve the end effector desired movement. An end effector generally refers to the device at the end of a robotic arm, although in some cases, e.g., in serial robot manipulators, the end effector may also refer to the last link of the robot.

SUMMARY

This specification describes systems and techniques that allow for users to more easily generate control instructions for operating a robot. For example, the control instructions can include instructions for operating the robot to manipulate, e.g., grasp, an object.
According to an aspect, there is provided a method for controlling a robot manipulator that has a plurality of joints, wherein the method comprises: obtaining a control input that comprises one or more velocity values that specify a target velocity of a reference point in a given coordinate frame; determining a respective joint velocity for each of the plurality of joints by generating a solution to an optimization problem formulated from the control input; and controlling the robot manipulator, including causing the plurality of joints of the robot manipulator to move in accordance with the respective joint velocities to approximate the control input.
The reference point may be located at a specified position relative to a plurality of contact points on the robot manipulator that are used to manipulate objects.
The reference point may be an instantaneous centroid of the plurality of contact points on the robot manipulator that are used to manipulate objects.
The target velocity of the reference point may comprise a target angular velocity defined with reference to the given coordinate frame. For example, if the reference point is specified with respect to a plurality of contact points (e.g. as their centroid), the target angular velocity may be an average angular velocity of the contact points about the reference point (a weighted average or an unweighted average).
The target velocity of the reference point may comprise a target linear velocity defined with reference to the given coordinate frame.
The control input may further specify a respective target velocity of each contact point relative to the reference point.
Generating the solution to the optimization problem may comprise: formulating the optimization problem as a least squares optimization problem comprising an objective function that includes a term dependent on a set of decision variables, the set of decision variables comprising (i) first decision variables corresponding to the respective joint velocities of the plurality of joints, (ii) second decision variables corresponding to the respective velocities of the contact points relative to the reference point, (iii) third decision variables corresponding to the target linear velocity of the reference point, and (iv) fourth decision variables corresponding to the target angular velocity of the reference point, and a set of constraints defining lower or upper bound on possible values of some or all of the decision variables; and generating the solution to the optimization problem by computing optimized values for the first decision variables which optimize the objective function, subject to the set of constraints.
The least squares optimization problem may be in the form of:

$$w_i \left\| S_i\, x - b_i \right\|^2$$

subject to $l_j \le C_j x \le u_j$,

where i is an integer index (which, as explained below, indexes a number of "tracking tasks"), j is a further index variable labelling the constraints, x (which may be considered a vector) are the decision variables, $w_i$, $S_i$, and $b_i$ are weight matrix, coefficient matrix, and bias matrix, respectively, that define the objective function, and $l_j$, $u_j$, and $C_j$ are lower bound, upper bound, and coefficient matrix, respectively, that define the set of constraints. A sum over the values of *i* is implied; that is, the objective function is defined as a sum over the objective terms for respective values of *i*.

The constraints may be selected to enforce relationships between the decision variables which are due to the construction of the robot manipulator. In other words, some or all of the constraints encode the physical capabilities of the robot manipulator.

The robot manipulator may be a dexterous robotic hand.

Obtaining the data that specifies the target velocity of the object may comprise: obtaining teleoperation data transmitted from a teleoperation device of the robot manipulator.

The teleoperation device may have a motion sensor with lower degrees-of-freedom (DoF) than the robot manipulator.

The method may further comprise using the teleoperation device to control the robot manipulator to generate training data for training a machine learning model configured to generate control signals for controlling the robot manipulator to perform one or more different tasks.

The machine learning model may be trained on the training data using reinforcement learning techniques.

According to another aspect, there is provided one or more computer-readable storage media encoded with instructions that, when executed by one or more computers, cause the one or more computers to perform the operations of the above method aspect.

According to a further aspect, there is provided a system comprising one or more computers and one or more storage devices storing instructions that when executed by one or more computers cause the one or more computers to perform the respective operations of the above method aspect.

It will be appreciated that features described in the context of one aspect may be combined with features described in the context of another aspect.

Particular embodiments of the subject matter described in this specification can be implemented so as to realize one or more of the following advantages.

The robot motion control techniques described in this specification allow users to more easily generate control instructions for robot manipulators with any number of degrees-of-freedom, including a fully actuated robotic hand, to facilitate custom and dexterous object manipulation by the robot manipulator that fit their needs. In particular, using the described techniques can allow a user to generate an accurate control instruction for a robot manipulator by using a controller having many fewer degrees-of-freedom than the robot (or, by otherwise submitting an input specifying many fewer degrees of freedom than are required to actually control the robot). In contrast, many existing approaches for operating (or teleoperating) a robot with a large number of degrees-of-freedom, performing dexterous robotic tasks, or both require highly customized hardware through which the user may aptly generate control instructions. Scalable adoption of such hardware is unlikely as it is costly to build, maintain and operate, and is sometimes insufficiently interactive or insufficiently sensitive.

The robot motion control techniques described in this specification enable a variety of technological improvements that were previously not possible. For example, custom and expensive hardware such as haptic gloves that would otherwise be required to teleoperate a dexterous robot manipulator is no longer required. Instead, the robot manipulator can be effectively controlled by any suitable teleoperation device equipped with a motion sensor with a lower, and sometimes much lower, number of degrees of freedom than the actual robot manipulator. This scales up not only the usability of the robot manipulators in a wide range of technological use cases, but also the accessibility of the robot manipulators by different individual users. For example, the described techniques facilitate scalable generation of demonstration data by a number of expert demonstrators for training a machine learning model configured to generate model outputs that can be used to control the robot manipulator.

As another example, the described robot motion control techniques can aid in reinforcement learning-based robotic control. Many existing RL-based robotic tasks require selecting an action from a large discrete action space, a continuous action space, or a hybrid action space, i.e., with some sub-actions being discrete and others being continuous. Either during training or, after training, at run time, iteratively searching through the set of possible actions is computationally intensive and consumes a significant amount of computational resources when the action space is large or continuous or both. By incorporating the described robot motion control techniques, the robot manipulators can be effectively controlled with control inputs defining a relatively small number of actions. In addition, during training, the described techniques allow for more efficient exploration through the action space, and thus makes it easier to learn more effective action selection policies. Thus, the described robot motion control techniques can control the robot manipulators in RL-based robotic tasks with large discrete action spaces, continuous action spaces, or hybrid action spaces with reduced latency and reduced consumption of computational resources while still maintaining effective performance.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a diagram that illustrates an example system.
FIG. 2 is a flowchart of an example process for controlling a robot manipulator.
FIG. 3 is a diagram that illustrates an example reinforcement learning system.

Like reference numbers and designations in the various drawings indicate like elements.

DETAILED DESCRIPTION

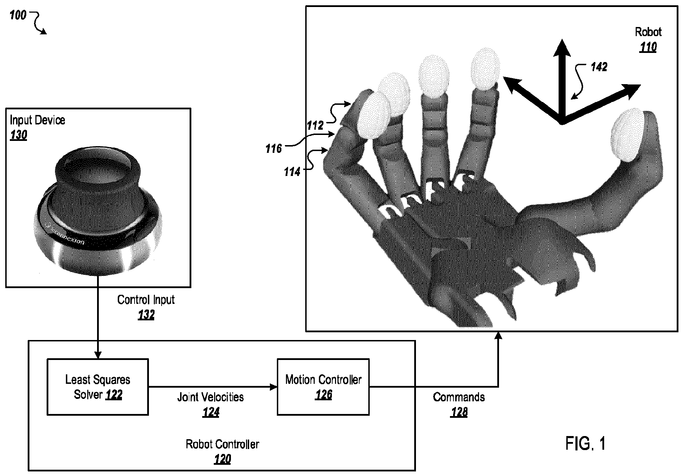

FIG. 1 is a diagram that illustrates an example system 100. The system 100 is an example of a system that can implement the robot motion control techniques described in this specification.

The system 100 includes a number of functional components, including a robot manipulator 110, a robot controller 120 implemented as computer programs on one or more computers in one or more locations which controls movement of the robot 110, and an input device 130 through which a user may generate a control input 132 for operating the robot 110, e.g., by inputting or otherwise specifying target movements, e.g., target poses, target velocities, or both, of the robot manipulator 110.

In this specification, a robot manipulator (or, for short, robot) is a machine having one or more movable components and one or more actuators that can effectuate the physical movement of the one or more movable components.

In the example of FIG. 1, the robot 110 has been illustrated as a robotic hand that includes multiple links, e.g., link 112 (which corresponds a distal finger part) and link 114 (which corresponds to a middle finger part), and joints that connect the links, e.g., joint 116 (which corresponds to a distal finger joint) coupled between the links 112 and 114. More generally, the robot may include at least one series of successive links (in this example, links 112, 114) for which the position of each link affects the position of each link of the series which is later in the series, and the last link (in this example, link 112) of the series may define a contact point (in this example, a fingertip). Each joint, which can for example be a rotational, translational, or prismatic joint, can include an actuator that moves the links into target poses and at target velocities based on commands 128 received from the robot controller 120. For example, the actuators can include motors or other sources of energy that cause the links to move into the target poses and at target velocities.

The robot controller 120 can generate the commands 128 based on the control inputs 132 specifying target velocities of the robot 110.

The input device 130 can be equipped with one or more motion sensors (e.g., an infrared or optical motion sensor) that are configured to detect movement of the input device and output the one or more velocity values that are derived from the detected movement. For example, in the cases where the input device 130 is a three degrees-of-freedom (3 DoF) input device, e.g., an input device that is equipped with a 3 DoF motion sensor, the control input 132 can include a respective linear velocity value along each axis (e.g., x, y, or z axis) of a given three-dimensional coordinate system. As another example, in the cases where the input device 130 is a six degrees-of-freedom (6 DoF) input device, the control input 132 can additionally include a respective angular velocity value along each axis of the three-dimensional coordinate system.

Additionally or alternatively, the robot controller 120 can generate the commands 128 based on the control inputs 132 specifying target poses of the robot 110. For example, the control input 132 can include spatial coordinates (e.g., x, y, and z values) in the three-dimensional coordinate system, and can also include orientation coordinates (e.g., pitch, yaw, or roll values) in the three-dimensional coordinate system.

The target velocity, target pose, or both of the robot 110 can be defined with respect to any reference point 142 in space, defined relative to the three-dimensional coordinate system. The reference point 142 of the robot 110 can generally indicate a "point of interest" for object manipulation. In some implementations, the reference point can be a centroid or center of mass of an actual (or virtual) object to be manipulated, e.g., grasped, by the robot. In some other implementations, the reference point can be located at a specified position relative to a plurality of contact points on the robot 110 that are used to manipulate objects. For example, the reference point can be an instantaneous centroid of the plurality of contact points on the robot that could be used to manipulate objects, such as an instantaneous centroid of the fingertips of the robot 110 shown in FIG. 1.

As another example, in the cases where the input device 130 includes one or more depressible keys or buttons, the control input 132 can further specify a respective target velocity of each of one or more components of the robot 110, such as the respective target velocities at which the plurality of contact points of the robot move away from the reference point (namely the "opening" velocity of the fingertips of the robot 110 shown in FIG. 1), which may be similarly defined relative to the three-dimensional coordinate system. In this example, the value of the respective target velocity can be derived from the state or movement information reported by a touch sensor, transducer, or switch of the input device 130 that is coupled to the corresponding depressible key or button.

In particular, the robot controller 120 uses a least squares solver 122 to determine values of the joint velocities 124 for one or more of the plurality of joints of the robot 110 based on the target velocities of the robot 110 that are specified by the control input 132. The least squares solver 122, an example of which is described in http://ceres-solver.org, generally implements software that is configured to calculate the values for the joint velocities that provide the target velocities, by virtue of using, e.g., an iterative numerical or analytic algorithm, to generate a solution to a given optimization problem that is specific to the robot model. The least squares solver 122 permits greater generalizability than an unconstrained differential kinematics solver, such as a Jacobian inverse-based solver, by allowing customized specification of affine constraints on the decision variables. To control the robot using the velocity values for the joints, the least squares solver 122 can provide the determined joints velocity values as input to a motion controller 126 of the robot controller 120.

The motion controller 126 can then generate and provide commands 128 to an actuator of each joint that cause the joints to move at their respective target velocities, so as to control the robot 110 to approximate the control input 132.

Determining joint velocities 124 from the control input 132 by using the least squares solver 122 will be described further below, but in short, this configuration allows for the robot controller 120 to provide a level of abstraction above the hardware-interface level of the motion controller, to allow users to more easily specify target velocities of the robot 110, e.g., when controlling the robot 110 to perform a robotic task. Through the robot controller 110 described in this specification, the user will be able to effectively control the robot 110 by using an input device 130 equipped with a motion sensor with lower degrees-of-freedom (DoF) than the robot 110. In some examples, the user will be able to control the multiple fingertips of a fully actuated robotic hand to move in a coordinated fashion, despite only having to provide a control input 132 which includes velocity values for fewer DoF than the actual number of joints of the robotic hand.

Additionally or alternatively, the robot controller 120 can use a different solver (e.g., an inverse kinematics solver) to determine a position and an angle parameter for each of one or more of the plurality of joints of the robot 110 based on the target pose of the robot 110 specified by the control input 132. The angle for a joint is the angle between the two links that the joint connects. Upon being provided with the determined joints position and angle parameters, the motion controller 126 can similarly generate and provide commands 128 to an actuator of each joint that cause the joints to move into their respective target positions and angles.

Although illustrated as being logically adjacent, the robot 110, the robot controller 120, and the input device 130 and the software or hardware modules performing the operations may actually be located across different computing devices or different memory devices. In some implementations, these components can be implemented in multiple locations that are coupled to each other through any appropriate communications network, e.g., an intranet or the Internet, or combination of networks. For example, the input device 130 can be a teleoperation device that is physically separate from the robot 110, the robot controller 120, or both. As another example, despite illustrated as being included as part of the robot controller 120, the least squares solver 122 can actually be implemented on a remote server that is in communication with the system 100 over a data communication network, and the system 100 can use the solver, e.g., by using an application programming interface (API) offered by the solver.

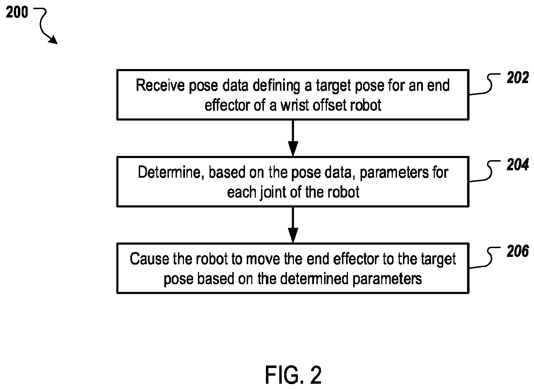

FIG. 2 is a flow diagram of an example process 200 for controlling a robot manipulator. For convenience, the process 200 will be described as being performed by a system of one or more computers located in one or more locations. For example, a system, e.g., the system 100 of FIG. 1, appropriately programmed, can perform the process 200. The robot manipulator can have a plurality of joints.

The system obtains a control input that includes one or more velocity values (step 202). The control input may be generated by a user of the system by using an input device of the system. The input device can be equipped with one or more motion sensors that are configured to detect movement of the input device and output the one or more velocity values that are derived from the detected movement. For example, the control input can include a respective linear velocity value along each axis of a three-dimensional coordinate system, and can also include a respective angular velocity value along each axis of the three-dimensional coordinate system.

In some implementations, the three-dimensional coordinate system is a coordinate system having three mutually perpendicular coordinate axes (i.e., the x-axis, the y-axis, and the z-axis) centered at a particular location on or near the robot, e.g., on a base position of the robot or at a different fixed location in an operation environment of the robot.

The one or more velocity values collectively specify a target velocity of a reference point in space, defined relative to the three-dimensional coordinate system. For example, the target velocity of the reference point can include a target 3D angular velocity and a target 3D linear velocity of the reference point. For example, the reference point may be located at a specified position, such as an instantaneous centroid, relative to a plurality of contact points on the robot manipulator that are used to manipulate objects.

The control input can further specify a respective target velocity of each of one or more components of the robot 110, which may be derived from the state or movement information reported by a touch sensor, transducer, or switch that is coupled to each of one or more depressible keys or buttons of the input device. For example, the control input can specify the respective target velocities at which the plurality of contact points of the robot move away from the reference point.

The system determines a respective joint velocity for each of the plurality of joints by generating a solution to an optimization problem formulated from the control input (step 204). In particular, the optimization problem can be a linear least squares quadratic optimization (LSQP) problem that is in the form of:

$$\underset{x}{\operatorname{argmin}} \sum_i w_i \|M_i x - b_i\|^2$$

subject to $l < Cx < u$,

where $x$ are the set of decision variables, $w_i$, $S_i$, and $b_i$ are weight scalar, coefficient matrix, and bias vector, respectively, for the $i$-th tracking task that define the objective function of the optimization problem, and $l$, $u$, and $C$ are the lower bound, upper bound, and coefficient matrix, respectively, that define a set of constraints of the optimization problem. The set of constraints defines the lower or upper bound on possible values of linear combinations of the decision variables.

Specifically, the set of decision variables can be defined as follows:

$$x := \begin{bmatrix} \dot{q} & v_o & v_c & \omega \end{bmatrix}^T \in \mathbb{R}^{n+7},$$

where n is the number of plurality of joints (the number of degrees of freedom associated with the joints), $\dot{q}$ are the first decision variables that correspond to the respective joint velocities of the plurality of joints; $v_o$ are the second decision variables that correspond to the respective velocities of the contact points relative to the reference point; $v_c$ are the third decision variables that correspond to the target linear velocity of the reference point; and $\omega$ are the fourth decision variables that correspond to the target angular velocity of the reference point.

Here, $\dot{q}$ can be represented as an n-dimensional vector, i.e., a vector with n numeric values, that defines the n respective joint velocities of the joints. $v_o$ can be represented as a scalar value that defines the velocity at which each contact point moves away from the reference point. $v_c$ can be represented as an three-dimensional vector defining the 3D target linear velocity of the reference point defined with reference to the given coordinate frame. And $\omega$ can be represented as a three-dimensional vector defining the 3D target angular velocity of the reference point defined with reference to the given coordinate frame. Hence the set of decision variables mentioned above can be can be represented as a vector (referred to below as the decision variable vector) with n+7 dimensions.

The system generates the solution to the optimization problem by computing optimized values for the first decision variables which optimize, e.g., minimize, the objective function, subject to the set of constraints. In other words, in response to the user specifying target values for $v_o$, $v_c$, and $\omega$ by using the input device, the system can compute the values for the joint velocities $\dot{q}$ that the robot should track in order to approximate the user-specified value as close as possible. For example, the system can do this by inputting the target values specified by the user and data that describes the set of constraints to a least squares solver, e.g., by using an application programming interface (API) offered by the solver, and in response receiving as an output from the solver the values for the joint velocities of the robot. In some cases, the solution can be an exact solution defining globally optimized values for the first decision variables such that there are no other feasible values that could further optimize objective function, while in other cases, the solution can be an approximate solution, e.g., one of multiple suboptimal local solutions.

In more detail, the objective term which is in the form of:

$$w_i \|S_i\, x - b_i\|^2,$$

can define separate tracking tasks for different elements of the decision variable vector, indexed by the integer $i$. In the equation above, $S_i$ is a selection matrix that extracts the elements from the entire decision variable vector; $w_i$ is the weight scalar that defines a measure of importance of the objective term being defined relative to the other objective terms; and $b_i$ are the target (i.e., user-specified) values for the selected elements.

Specifically, four separate tracking tasks can be defined by the objective function, one for each of $q$, $v_o$, $v_c$, and $\omega$ to track the desired values for each of the quantities. In addition, an additional task can be defined by the objective function for the angular velocity $\omega_i$ of each contact point. Once defined, this additional task could allow the user to set a suitable angular velocity to maintain the contact points pointing towards the reference point:

$$w_{\omega_i} \|\omega_i - \omega_i'\|^2,$$

where $\omega_i$ is the target angular velocity for the i-th contact point, and $\omega_i'$ are the user-specified values for $\omega_i$. The angular velocity of the contact point can be described by attaching a coordinate frame to the contact point and then defining the angular velocities of its coordinate axes relative to the given coordinate frame.

The objective function can thus be defined as:

$$w_{\dot{q}} \| \dot{q} - \dot{q}' \|^2 + w_{v_o} \| v_o - v_o' \|^2 + w_{v_c} \| v_c - v_c' \|^2$$
$$+ w_\omega \| \omega - \omega' \|^2 + \sum w_{\omega_i} \| \omega_i - \omega_i' \|^2 \quad,$$

where $q'$, $v_o'$, $v_c'$, and $\omega'$ are the target values for $q$, $v_o$, $v_c$, and $\omega$, respectively.

To ensure that the decision variables remain physically consistent, a set of constraints need to be defined as follows. These equality constraints are generally defined as equality constraints, although in some cases can also be relaxed into inequality constraints or tasks to improve numerical stability.

Joint velocity and radial velocity relative to the reference point

For $v_o$ and $\dot{q}$ to be consistent, each contact point velocity relative to the reference point resulting from $\dot{q}$ must match $v_o$ along the direction connecting the reference point to the contact point. This is a 1 DoF constraint that can be added for each contact point of the robot. This relationship is given by the following equation:

$$\hat{r}_i \cdot (v_i - v_c) = v_o,$$

where $r_i$ is the instantaneous vector pointing from the reference point to the $i$-th contact point, $\hat{r}_i$ is its associated unit vector, $v_i$ is the linear velocity of the $i$-th contact point, and $\bullet$ is the scalar product between the two vectors. Rewriting this equation by noting that $v_i$ is related to the joint velocities through the Jacobian matrix $J_{v_i}$ by the relationship of $v_i = J_{v_i}\dot{q}$, the constraint can then be defined as:

$$\hat{r}_i^T J_{v_i} \dot{q} - \hat{r}_i^T v_c - v_o = 0,$$

which can be written in least squares quadratic optimization (LSQP) form by taking $C_i = [\hat{r}_i^T J_{v_i} \quad -1 \quad -\hat{r}_i^T \quad 0_{1x3}]$ and $u_i = l_i = 0$, where $0_{1 \times 3}$ represents a column-vector of length 3 with zeros everywhere.

Joint velocity and 3D linear velocity of the reference point

For $v_c$ and $\dot{q}$ to be consistent, the average of all the contact point velocities resulting from $\dot{q}$ must match $v_c$ in every direction. This constraint is a 3 DoF constraint. This relationship is given by the following equation:

$$\frac{1}{n_{\text{Contact Points}}} \sum v_i = v_c.$$

Writing the left-hand side in terms of the joint velocities gives:

$$[\frac{1}{n_{\text{Contact Points}}} \sum J_{v_i}] \dot{q} - v_c = 0,$$

$$C = [\frac{1}{n_f}\sum J_{v_i} \quad 0 \quad -I_{3x3} \quad 0_{3x3}]$$

which can be written in LSQP form by taking and $u = l = 0$, where $0_{3\times3}$ represents a 3x3 matrix with zeros everywhere, and $I_{3\times3}$ is the identity matrix of size 3x3.

Joint velocity and 3D angular velocity of the reference point

For $\omega$ and $\dot{q}$ to be consistent, the contact point velocities must result in an angular velocity $\omega$ relative to the reference point. This constraint is a 2 DoF constraint that can be added for each contact point of the robot.

The relationship between the angular velocity of a rigid body and the tangential linear velocity of a point is given by the following equation:

$$\omega \times r_i = \left(v_i - v_c\right)_{\perp},$$

which can be expanded by choosing any two axes $\hat{b}_i$ and $\hat{t}_i$ that form an orthonormal basis with $\hat{r}_i$. These axes can be obtained by following the Gram-Schmidt process. The expanded equation can take the form:

$$[\hat{b}_i \cdot (r_i \times \omega)]\hat{b}_i + [\hat{t}_i \cdot (r_i \times \omega)]\hat{t}_i + [\hat{r}_i \cdot (r_i \times \omega)]\hat{r}_i$$
$$= [\hat{b}_i \cdot (v_c - v_i)]\hat{b}_i + [\hat{t}_i \cdot (v_c - v_i)]\hat{t}_i + [0]\hat{r}_i .$$

For the left-hand side vector and right-hand side vector to be equal, each of its independent components on the orthonormal basis $\hat{b}_i, \hat{t}_i, \hat{r}_i$ must match:

$$\hat{b}_i^T r_{i_\times} \, \omega = \hat{b}_i^T \left(v_c - J_{v_i}\dot{q}\right)$$

$$\hat{t}_i^T r_{i_\times} \, \omega = \hat{t}_i^T \left(v_c - J_{v_i}\dot{q}\right)$$

$$\hat{r}_i^T r_{i_\times} \, \omega = 0 \qquad ,$$

where $r_{i_\times}$ is the skew-symmetric matrix such that $r_{i_\times}v = r_i \times v$ for any vector v.

This is a 2 DoF constraint because the radial component of the contact point velocity relative to the reference point is unconstrained, since $\hat{r}_i \cdot (r_i \times \omega) = 0$ is a property of the vector triple product and the equality constraint for the component on $\hat{r}_i$ is always satisfied for any choice of $\omega, r_i, v_i, v_c$. In LSQP form, this can be rewritten as two separate 1 DoF constraints:

$$c_b = [\hat{b}_i^T J_{v_i} \quad 0 \quad -\hat{b}_i^T \quad \hat{b}_i^T r_{i_\times}] \text{ and } u_b = l_b = 0; \; c_b = [\hat{t}_i^T J_{v_i} \quad 0 \quad -\hat{t}_i^T \quad \hat{t}_i^T r_{i_\times}] \text{ and } u_t = l_t = 0 .$$

Accordingly, the coefficient matrix $C$, which is made up of the C matrix, and one of each of the $C_i$, $C_b$, and $C_t$ matrices for every contact point, can be generated by concatenating the values in these matrices along the column dimension (i.e., vertically stacking these matrices). The lower bound vector $l$ and upper bound vector $u$ can be generated in a similar manner. Collectively, the lower bound, upper bound, and coefficient matrix define the set of constraints of the optimization problem.

The system controls the robot to approximate the obtained control input which specifies the target velocity of the reference point (step 206). In particular, the system can use a motion controller to generate and send commands to cause the plurality of joints of the robot to move at the respective joint velocities determined from step 204.

In some implementations, the robot 110 in the example of FIG. 1 can be controlled by a machine learning system, which generally includes a machine learning model that has been configured through training, e.g., reinforcement learning (RL) training, to generate model outputs that can be used to control the robot to perform one or more different tasks.

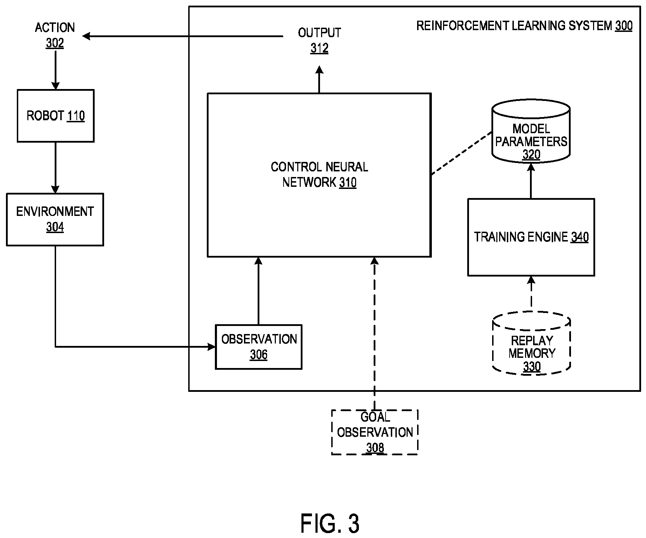

FIG. 3 shows an example reinforcement learning system 300. The reinforcement learning system 300 is an example of a system implemented as computer programs on one or more computers in one or more locations that controls a robot, e.g., the robot 110 of FIG. 1, in order to cause the robot to perform a given task.

For example, the tasks can include causing the robot to navigate to different locations in an environment 304, causing the robot to locate different objects, causing the robot to pick up different objects or to move different objects to one or more specified locations, and so on.

The reinforcement learning system 300 controls the robot by selecting actions 302 to be performed by the robot while the robot is interacting with the environment 304 in response to observations 306 that characterize states of the environment. The robot typically moves (e.g. navigates and/or changes its configuration) within the environment 304.

The observations 306 may include, e.g., one or more of: images (such as ones captured by a camera and/or Lidar sensor), object position data, and other sensor data from sensors that capture observations as the agent interacts with the environment, for example sensor data from an image, distance, or position sensor or from an actuator. For example in the case of a robot, the observations may include data characterizing the current state of the robot, e.g., one or more of: joint position, joint velocity, joint force, torque or acceleration, e.g., gravity-compensated torque feedback, and global or relative pose of an item held by the robot. In other words, the observations may similarly include one or more of the position, linear or angular velocity, force, torque or acceleration, and global or relative pose of one or more parts of the agent. The observations may be defined in 1, 2 or 3 dimensions, and may be absolute and/or relative observations. The observations may also include, for example, sensed electronic signals such as motor current or a temperature signal; and/or image or video data for example from a camera or a LIDAR sensor, e.g., data from sensors of the agent or data from sensors that are located separately from the agent in the environment.

The actions 302 may be control inputs to control the robot, e.g., torques for the joints of the robot or higher-level control commands, or the autonomous or semi-autonomous land, air, sea vehicle, e.g., torques to the control surface or other control elements of the vehicle or higher-level control commands.

In other words, the actions can include for example, position, velocity, or force/torque/acceleration data for one or more joints of a robot or parts of another mechanical agent. Action data may additionally or alternatively include electronic control data such as motor control data, or more generally data for controlling one or more electronic devices within the environment the control of which has an effect on the observed state of the environment.

In particular, the reinforcement learning system 300 selects actions 302 to be performed by the robot using a control neural network 310 and a training engine 340.

The control neural network 310 is a neural network that receives as an input an observation 306 about the state of the environment 304 and generates an output 312 that can be used to control the robot.

The control neural network 310 can be implemented with any appropriate neural network architecture that enables it to perform its described function. As a particular example, the control neural network 310 may include an "embedding" sub-network, a "core" sub-network, and a "selection" sub-network. A sub-network of a neural network refers to a group of one or more neural network layers in the neural network. When the observations include images, the embedding sub-network can be a convolutional sub-network, i.e., that includes one or more convolutional neural network layers, that is configured to process the observation for a time step. When the observations include lower-dimensional data, the embedding sub-network can be a fully-connected sub-network. The core sub-network can be a recurrent sub-network, e.g., that includes one or more long short-term memory (LSTM) neural network layers, that is configured to process the output of the embedding sub-network and, in some cases, action data defining each action from the set of possible actions (or data derived from the action data or both). The selection sub-network can be configured to process the output of the core sub-network to generate an action selection output that can be used to determine an action to be performed by the robot at each of multiple time steps. For example, the action selection output can include respective Q value outputs for the possible actions, and the system 300 can select the action to be performed by the robot, e.g., by sampling an action in accordance with the Q values (or probability values derived from the Q values) for the actions, or by selecting the action with the highest Q value. For each action, the corresponding Q value is a prediction of expected return resulting from the robot performing the action in response to the observation.

To allow the robot 110 to effectively interact with the environment 304, the reinforcement learning system 300 includes a training engine 340 that trains the control neural network 310 to determine trained values of the parameters 320 of the control neural network 310. To train the control neural network 310, the training engine 340 can use any of the example training techniques described in Ibarz, Julian, et al. "How to train your robot with deep reinforcement learning: lessons we have learned." The International Journal of Robotics Research 40.4-5 (2021): 698-721, in addition to or instead of other known reinforcement learning training techniques.

Because using the motion control techniques described above can allow the robot to be effectively controlled by any suitable teleoperation device equipped with a motion sensor with lower degrees-of-freedom than the actual robot, and without the need for custom and expensive hardware such as haptic gloves, large volumes of demonstration data of sufficient quality may now be generated and collected in a scalable manner. For example, the teleoperation device can be a 3 DoF input device, or a 6 DoF input device, while the actual robot is a dexterous robotic hand with 10, 20, or more DoF provided by the joints of the dexterous robotic hand.

The demonstration data can be generated by a number of expert demonstrators. For example, the expert demonstrator can be an already-learned robot control machine learning model, a fixed robot control policy, a random robot control policy, a human expert, or the like that interfaces the system 100 of FIG. 1. For example, the expert demonstrator can be a remote user of the system 100 which controls the robot, e.g., by using an application programming interface (API) or another interface made available by the system 100. The demonstration data can be used to assist in the training of the control neural network 310 in any of a variety of ways.

In some implementations, the training engine 340 maintains a replay memory 330 which stores pieces of experience data generated as a consequence of the interaction of the robot 120 (or another robot) with the environment 304 (or with another instance of the environment) for use in training the control neural network 310. The training engine 340 trains the control neural network 310 by repeatedly selecting pieces of experience data from the replay memory 330 and training the control neural network 310 on the selected pieces of experience data and by using offline reinforcement learning training techniques. In these implementations, some of the experience data can include or be otherwise derived from the demonstration data generated by the expert demonstrators controlling the robot (or another robot) to perform one or more specified tasks, which need not be the same as the given task on which control neural network 310 is being trained.

In some implementations, the demonstration data includes a plurality of demonstration sequences, with each demonstration sequence including a plurality of demonstration observations characterizing states of an environment while a demonstrating robot interacts with the environment, and the training engine 340 trains the control neural network 310 on the demonstration data through imitation learning. In these implementation, the control neural network 310 can be configured as a "goal-conditioned" control neural network which, at any given time step during training, generates the output 312 by processing not only a current observation 306 characterizing the current state of the environment 304 (or data derived from the current observation or both) at the time step, but also a goal observation 308 from a demonstration sequence that characterizes the goal state of the environment 304 (or data derived from the goal observation or both).

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, a Microsoft Cognitive Toolkit framework, an Apache Singa framework, or an Apache MXNet framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1. A method for controlling a robot manipulator that has a plurality of joints, wherein the method comprises:

   obtaining a control input that comprises one or more velocity values that specify a target velocity of a reference point in a given coordinate frame;
   determining a respective joint velocity for each of the plurality of joints by generating a solution to an optimization problem formulated from the control input; and
   controlling the robot manipulator, including causing the plurality of joints of the robot manipulator to move in accordance with the respective joint velocities to approximate the control input.

2. The method of claim 1, wherein the reference point is located at a specified position relative to a plurality of contact points on the robot manipulator that are used to manipulate objects.

3. The method of claim 2, wherein the reference point is an instantaneous centroid of the plurality of contact points on the robot manipulator that are used to manipulate objects.

4. The method of any one of claims 1-3, wherein the target velocity of the reference point comprises a target angular velocity defined with reference to the given coordinate frame.

5. The method of any one of claims 1-3, wherein the target velocity of the reference point comprises a target linear velocity defined with reference to the given coordinate frame.

6. The method of any preceding claim when dependent on claims 2 or 3, wherein the control input further specifies a respective target velocity of each contact point relative to the reference point.

7. The method of any one of claims 1-6, wherein generating the solution to the optimization problem comprises:

   formulating the optimization problem as a least squares optimization problem comprising

   an objective function that includes a term dependent on a set of decision variables, the set of decision variables comprising (i) first decision variables corresponding to the respective joint velocities of the plurality of joints, (ii) second decision variables corresponding to the respective velocities of the contact points relative to the reference point, (iii) third decision variables corresponding to the target linear velocity of the reference point, and (iv) fourth decision variables corresponding to the target angular velocity of the reference point, and

a set of constraints defining lower or upper bound on possible values of some or all of the decision variables; and

generating the solution to the optimization problem by computing optimized values for the first decision variables which optimize the objective function, subject to the set of constraints.

8. The method of claim 7, wherein the least squares optimization problem is in the form of:

$$w_i \left\| S_i\, x - b_i \right\|^2$$

subject to $l_j \leq C_j x \leq u_j$,

where x are the decision variables, $w_i$, $S_i$, and $b_i$ are weight matrix, coefficient matrix, and bias matrix, respectively, that define the objective function, and $l_j$, $u_j$, and $C_j$ are lower bound, upper bound, and coefficient matrix, respectively, that define the set of constraints.

9. The method of any one of claims 1-8, wherein the robot manipulator is a dexterous robotic hand.

10. The method of any one of claims 1-9, wherein obtaining the data that specifies the target velocity of the object comprises:
obtaining teleoperation data transmitted from a teleoperation device of the robot manipulator.

11. The method of claim 10, wherein the teleoperation device has a motion sensor with lower degrees-of-freedom (DoF) than the robot manipulator.

12. The method of claim 11, further comprising using the teleoperation device to control the robot manipulator to generate training data for training a machine learning model configured to generate control signals for controlling the robot manipulator to perform one or more different tasks.

13. The method of claim 12, wherein the machine learning model is trained on the training data using reinforcement learning techniques.

14. One or more computer-readable storage media storing instructions that when executed by one or more computers cause the one or more computers to perform the respective operations of any one of the methods of any of the preceding claims.

15. A system comprising one or more computers and one or more storage devices storing instructions that when executed by one or more computers cause the one or more computers to perform the respective operations of any one of the methods of any of the preceding claims.

**FIG. 1**

200

```
┌─────────────────────────────────────────────┐
│ Receive pose data defining a target pose for an end │ ⌐ 202
│           effector of a wrist offset robot          │
└─────────────────────────────────────────────┘
                        │
                        ▼
┌─────────────────────────────────────────────┐
│ Determine, based on the pose data, parameters for │ ⌐ 204
│              each joint of the robot              │
└─────────────────────────────────────────────┘
                        │
                        ▼
┌─────────────────────────────────────────────┐
│ Cause the robot to move the end effector to the target │ ⌐ 206
│         pose based on the determined parameters        │
└─────────────────────────────────────────────┘
```

FIG. 2

FIG. 3

Europäisches
Patentamt

European
Patent Office

Office européen
des brevets

## EUROPEAN SEARCH REPORT

Application Number

EP 22 19 4229

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TOH YUE PENG ET AL: "Dexterous telemanipulation with a multi-touch interface", 2012 12TH IEEE-RAS INTERNATIONAL CONFERENCE ON HUMANOID ROBOTS (HUMANOIDS 2012), IEEE, 29 November 2012 (2012-11-29), pages 270-277, XP032521265, ISSN: 2164-0572, DOI: 10.1109/HUMANOIDS.2012.6651531 [retrieved on 2013-10-31] * page 270 - page 276 * ----- | 1-15 | INV. B25J9/16 ADD. G05B19/427 |
| A | US 2022/105624 A1 (KALAKRISHNAN MRINAL [US] ET AL) 7 April 2022 (2022-04-07) * the whole document * ----- | 1,12-14 | |
| A | MONTAÑO ANDRÉS ET AL: "Bilateral telemanipulation of unknown objects using remote dexterous in-hand manipulation strategies", IFAC-PAPERSONLINE, vol. 53, no. 2, 11 July 2020 (2020-07-11), pages 10076-10083, XP093023089, DE ISSN: 2405-8963, DOI: 10.1016/j.ifacol.2020.12.2730 * the whole document * ----- | 1,14 | TECHNICAL FIELDS SEARCHED (IPC) B25J |

The present search report has been drawn up for all claims

| Place of search | Date of completion of the search | Examiner |
|---|---|---|
| The Hague | 16 February 2023 | De Santis, Agostino |

## ANNEX TO THE EUROPEAN SEARCH REPORT
### ON EUROPEAN PATENT APPLICATION NO.

EP 22 19 4229

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2023

| Patent document cited in search report | Publication date | Patent family member(s) | Publication date |
|---|---|---|---|
| US 2022105624 A1 | 07-04-2022 | CN 113677485 A | 19-11-2021 |
| | | EP 3914424 A1 | 01-12-2021 |
| | | US 2022105624 A1 | 07-04-2022 |
| | | WO 2020154542 A1 | 30-07-2020 |

EPO FORM P0459

For more details about this annex : see Official Journal of the European Patent Office, No. 12/82

## REFERENCES CITED IN THE DESCRIPTION

**Non-patent literature cited in the description**

- **IBARZ, JULIAN et al.** How to train your robot with deep reinforcement learning: lessons we have learned. *The International Journal of Robotics Research,* 2021, vol. 40.4-5, 698-721